# EUROPEAN PATENT APPLICATION

(11) **EP 2 109 284 A1**
(43) Date of publication of application: **14.10.2009**
(21) Application number: 08300174.3
(22) Date of filing: 07.04.2008
(51) Int. Cl.: H04L 29/06, H04L 29/08

(54) **Protection mechanism against denial-of-service attacks via traffic redirection**

(71) Applicant: THOMSON Licensing, 92100 Boulogne-Billancourt (FR)
(72) Inventor: Mayeux, Pascal, 78420 Carrières-sur-Seine (FR); Potter, Frédéric, 92200 Neuilly-sur-Seine (FR)
(74) Representative: Ruellan-Lemonnier, Brigitte

(57) **Abstract**

The invention concerns a method of protection against computer attacks, in a communication network implementing a protocol comprising a registration step, said communication network comprising an access network part and a core network part, characterized in that it comprises the following steps:
- receiving, at the level of a software element (F) located between the access network part and the core network part, a registration request (R1) by a device (D) located in the access network part;
- answering the registration request (R1) by said software element (F), this answer including the requirement for a redirection to a software element (F1);
- checking, by said software element (F), during a limited time duration (TD), that a subsequent registration request from the same device (D) is sent to the redirected software element (F1);
- sending a registration request (R3) to another software element (F2) located in the core network part, if a registration request (R2) is sent to the redirected software element (F1); and
- answering by said software element (F2) to said registration request (R2) through said software element (F).

The invention also concerns a device for the protection against computer attacks.

## Description

### FIELD OF THE INVENTION

The present invention pertains to the field of computer and networking security.

The present invention more particularly relates to a protection mechanism against Denial-of-Service attacks.

### BACKGROUND OF THE INVENTION

The present invention refers to the widely use of protocols based on UDP (*User Datagram Protocol*) which are based on a Registration mechanism. A well known and fast growing protocol of this kind is SIP (*Session Initiation Protocol).* These protocols use the IP protocol or Internet Protocol and its upper layer User Datagram Protocol and can be used either in Private Networks or in Public Networks such as the Internet. Recently, Skype (registered trademark), the software that allows to make phone calls over the Internet, has been exposed to a service breakdown due to a massive and simultaneous registration of its Skype terminals to the Skype network. This kind of issue can be easily reproduced either by human action, or due to imperfect engineering rules or software bugs and are commonly known as Denial-of-Service attacks or Distributed Denial-of-Service attacks (DDOS).

A denial-of-service (DoS attack) or distributed denial-of-service attack (DDoS attack) is an attempt to make a computer resource unavailable to its intended users. Although the means to, motives for, and targets of a DoS attack may vary, it generally consists of the concerted, malevolent efforts of a person or persons to prevent an Internet site or service from functioning efficiently or at all, temporarily or indefinitely.

Perpetrators of DoS attacks typically target sites or services hosted on high-profile web servers such as banks, credit card payment gateways, and even DNS root servers.

One common method of attack involves saturating the target (victim) machine with external communications requests, such that it cannot respond to legitimate traffic, or responds so slowly as to be rendered effectively unavailable. In general terms, DoS attacks are implemented by:
- forcing the targeted computer(s) to reset, or consume its resources so that it can no longer provide its intended service; or
- obstructing the communication media between the intended users and the victim so that they can no longer communicate adequately.

Denial-of-service attacks are considered violations of the IAB's Internet proper use policy. They also commonly constitute violations of the laws of individual nations.
[Source of this definition: Wikipedia Online encyclopedia available at http://www.wikipedia.org]

The only identified way of solving this issue consists in tunneling the protocol in IPSec for instance, which limits the use and brings additional complexity to the architecture, which will then limit deployments of the technology. IPsec (IP security) is a suite of protocols for securing Internet Protocol (IP) communications by authenticating and/or encrypting each IP packet in a data stream. IPsec also includes protocols for cryptographic key establishment.

### SUMMARY OF THE INVENTION

The present invention aims at finding a way to face issues related to DDOS with the above-defined protocols, as there is currently no identified good way of solving this issue.

The typical issue that is difficult to solve is the flooding of Register messages. As with these protocols, the element which registers is previously unknown, it is impossible to sort a licit Registration from an illicit Registration until the end of the registration process. Then, the Register flooding attack, which is a particular DDOS attack, cannot be easily detected or countered.

Solutions based on tunnel offer a good protection to these attacks from malicious users or elements. But the tunnel shall be opened prior to any Register message sent, which is not always the case. Tunnel solutions cannot be always deployed for various reasons: a common reason is in telephony networks the Emergency Numbers which shall be accessed in any cases, ie without tunnel too. So tunnel solutions are both complicated to deploy and operate and cannot face all types of use.

The present invention proposes a solution that can be called Security Function. The goal of the Security Function is to detect if the Register request comes from a licit device or not prior to the forwarding of the request to the Registration function. The Security Function will then systematically answer to the device to connect to another element. The redirected-to element will accept requests from the device for a limited period of time.

Only a real device will successfully redirect and then save the Registration Function from a DOS attack.

The present invention is defined, in its broader sense, as a method of protection against computer attacks, in a communication network implementing a protocol comprising a registration step, said communication network comprising an access network part and a core network part, characterized in that it comprises the following steps:
- receiving, at the level of a software element (F) located between the access network part and the core network part, a registration request (R1) by a device (D) located in the access network part;
- answering the registration request (R1) by said software element (F), this answer including the requirement for a redirection to a software element (F1);
- checking, by said software element (F), during a limited time duration (TD), that a subsequent registration request from the same device (D) is sent to the redirected software element (F1);
- sending a registration request (R3) to another software element (F2) located in the core network part, if a registration request (R2) is sent to the redirected software element (F1); and
- answering by said software element (F2) to said registration request (R2) through said software element (F).

According to an embodiment, any device different from the device (D) which attempts to use said software element (F) during said during limited time duration (TD) is discarded.

Preferably, said protocol is based on UDP (*User Datagram Protocol).*

Advantageously, said protocol is SIP (*Session Initiation Protocol).*

According to an embodiment, said redirected software element (F1) is the same as said software element (F).

According to another embodiment, said redirected software element (F1) is different from said software element (F).

The present invention also concerns a device (D1) for the protection against computer attacks, in a communication network implementing a protocol comprising a registration step, said communication network comprising an access network part and a core network part, said device being located between the access network part and the core network part, characterized in that it comprises means for:
- receiving a registration request (R1) by another device (D) located in the access network part;
- answering the registration request (R1), this answer including the requirement for a redirection to a software element (F1);
- checking, during a limited time duration (TD), that a subsequent registration request from the device (D) is sent to the redirected software element (F1);
in that said redirected software element (F1) comprises means for sending a registration request (R3) to another software element (F2) located in the core network part, if a registration request (R2) is sent to the redirected software element (F1); and
in that said software element (F2) comprises means for answering to said registration request (R2) through said device (D1).

According to an embodiment, said redirected software element (F1) is implemented on said device (D1).

According to another embodiment, said redirected software element (F1) is not implemented on said device (D1).

The main advantage of this solution is that it can work without any tunneling protocol in any kind of networks (Public or Private).

As the Security Function does not need to handle complex procedures such as the management of the Registration, it will be able to face a huge amount of Register messages and redirect them immediately, and then save the Registration Function from illicit Register messages.

The redirected-to element will accept only requests from the device identified by the Security Function, and will systematically reject any other requests, meaning that it is a safe element.

A smart illicit device could implement a response mechanism to the redirection demand it signifies that the illicit device has a real IP address as it has received redirection demand. Therefore even if it succeeds in answering to the demand, the Security Function will be able to black list the IP address and then it will not reproduce the attack, which will counter successfully the attack.

As the redirected-to UDP port is randomly chosen, an illicit device cannot know in advance where to send the second Register, which dramatically reduces flooding attack to the redirected-to element.

### BRIEF DESCRIPTION OF THE DRAWINGS

The following detailed description will be better understood with the drawings, in which:
- Figure 1 shows a registration mechanism according to the prior art ; and
- Figure 2 illustrates the method according to the present invention.

### DETAILED DESCRIPTION

Any protocol based on UDP (*User Datagram Protocol*) which uses a registration mechanism - the registration mechanism consists in a device located in an Access Network (of any type, included Internet) which sends a registration message to a Registration Function located in the core network - can be attacked by a Denial-of-Service (DoS) or a Distributed Denial-of-Service (DDoS) based on the registration mechanism. An example of such a protocol is SIP (*Session Initiation Protocol).*

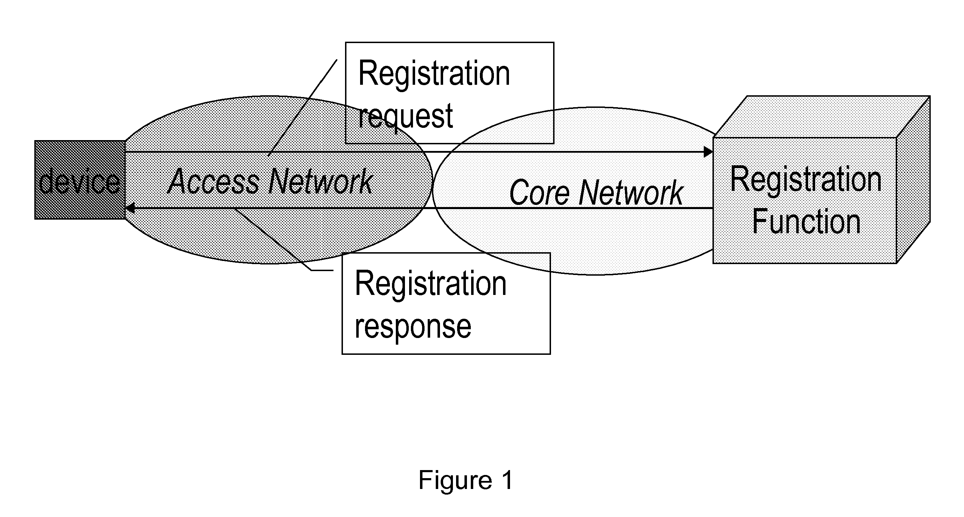

Figure 1 shows a registration mechanism according to the prior art. A communication network comprises an access network part and a core network part. A device located in the access network part sends a registration request to a Registration Function located in the core network part and then, the Registration Function send a registration response to the device.

An answer to such a DOS attack is the use of a Security Function, a software element, object of the present invention. The Security Function can be implemented in various equipments. The security function will protect the Registration Function from DOS attacks.

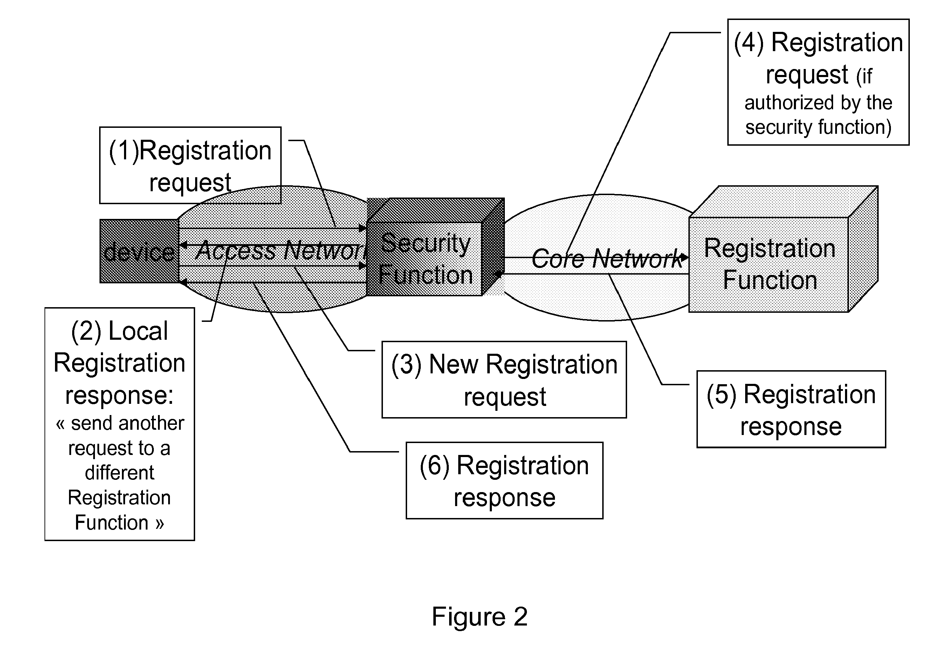

Figure 2 illustrates the method according to the present invention.

The Security Function will not be activated in normal network activities. It will be activated only if the network activities increase and a threshold is passed. Once the network activities raised the threshold, every new registration request will be first locally answered by the Security Function and not sent to the Registration Function (1), as shown on Figure 2,

The Security Function can be implemented as a stand alone function, on dedicated equipment like a Firewall or a Router, or specific equipment, or on the same equipment as the one to be protected.

The local response will include the requirement for a redirection to another UDP connected element which will also handle the described Security Function (2). This means for example the same element (same IP address) but with a different UDP port or an element with another IP address. Then, the Security Function will check, during a limited time duration, that a subsequent registration request from the same device will be sent to the redirected Security Function. Any other device which will try to use this redirected Security Function will be discarded.

If finally no registration request is sent, the attack is countered. It certainly was a device with a forged IP address.

If a registration request is sent to the redirected Security Function (3), then the registration request is sent to the Registration Function (4). The Registration Function will answer to the registration request to the Security Function (5), as shown on Figure 2. If the answer is a failed registration response, then it was a hacker with a true IP address (and not a forged one). In that case the IP address will be black listed by the Security Function. If the answer is a successful registration response, then it was a true user who wanted to register and the Security Function will send the registration response to the device (6), as shown on Figure 2.

As an example this mechanism could be implemented in SIP with the use of "302 Moved Temporarily" of "305 Use Proxy" responses to the REGISTER request.

In SIP, the Security Function local response can be implemented with the use of "302 Moved Temporarily" or a "305 Use Proxy" for instance. When receiving a SIP Register, the Security Function will locally answer with a "302" or "305" answer and give the URI of the redirected Security Function in the "302" or "305" Contact header.

Then the redirected Security Function will receive (or not) the redirected SIP Register as described above.

The above specification, examples and drawings provide a complete description of the method according to the present invention. Since many embodiments of the invention can be made without departing from the spirit and scope of the invention, the invention resides in the claims herein after appended.

## Claims

1. Method of protection against computer attacks, in a communication network implementing a protocol comprising a registration step, said communication network comprising an access network part and a core network part, **characterized in that** it comprises the following steps:
- receiving, at the level of a software element (F) located between the access network part and the core network part, a registration request (R1) by a device (D) located in the access network part;
- answering the registration request (R1) by said software element (F), this answer including the requirement for a redirection to a software element (F1);
- checking, by said software element (F), during a limited time duration (TD), that a subsequent registration request from the same device (D) is sent to the redirected software element (F1);
- sending a registration request (R3) to another software element (F2) located in the core network part, if a registration request (R2) is sent to the redirected software element (F1); and
- answering by said software element (F2) to said registration request (R2) through said software element (F).

2. Method of protection against computer attacks according to claim 1 **characterized in that** any device different from the device (D) which attempts to use said software element (F) during said limited time duration (TD) is discarded.

3. Method of protection against computer attacks according to claim 1 or 2 **characterized in that** said protocol is based on UDP (*User Datagram Protocol*).

4. Method of protection against computer attacks according to claim 3 **characterized in that** said protocol is SIP (*Session Initiation Protocol).*

5. Method of protection against computer attacks according to one of the preceding claims **characterized in that** said redirected software element (F1) is the same as said software element (F).

6. Method of protection against computer attacks according to one of the claims 1 to 4 **characterized in that** said redirected software element (F1) is different from said software element (F).

7. Device (D1) for the protection against computer attacks, in a communication network implementing a protocol comprising a registration step, said communication network comprising an access network part and a core network part, said device being located between the access network part and the core network part, **characterized in that** it comprises means for:
- receiving a registration request (R1) by another device (D) located in the access network part;
- answering the registration request (R1), this answer including the requirement for a redirection to a software element (F1);
- checking, during a limited time duration (TD), that a subsequent registration request from the device (D) is sent to the redirected software element (F1);
**in that** said redirected software element (F1) comprises means for sending a registration request (R3) to another software element (F2) located in the core network part, if a registration request (R2) is sent to the redirected software element (F1); and
**in that** said software element (F2) comprises means for answering to said registration request (R2) through said device (D1).

8. Device (D1) for the protection against computer attacks, according to claim 7, **characterized in that** said redirected software element (F1) is implemented on said device (D1).

9. Device (D1) for the protection against computer attacks, according to claim 7, **characterized in that** said redirected software element (F1) is not implemented on said device (D1).
